# EUROPEAN PATENT SPECIFICATION

(11) **EP 4 553 204 B1**
(45) Date of publication and mention of the grant of the patent: **29.07.2026**
(21) Application number: 24212597.9
(22) Date of filing: 13.11.2024
(51) Int. Cl.: D01D 1/02, C08B 16/00, D01D 5/06, D01D 5/247, D01F 2/00, D01F 2/02, D01F 2/08, D01F 13/02

(54) **CONTINUOUS NEUTRALIZATION AND SOLVENT-EXCHANGE OF WET-GEL CELLULOSE FIBERS**
KONTINUIERLICHE NEUTRALISIERUNG UND LÖSUNGSMITTELAUSTAUSCH VON NASSGELCELLULOSEFASERN
NEUTRALISATION CONTINUE ET ÉCHANGE DE SOLVANT DE FIBRES DE CELLULOSE EN GEL HUMIDE

(30) Priority: 13.11.2023 DE 102023131510; 29.05.2024 DE 102024115066
(43) Date of publication of application: 14.05.2025
(73) Proprietor: Deutsches Zentrum für Luft- und Raumfahrt e.V., 53227 Bonn (DE); Maastricht University, 6211 LK Maastricht (NL)
(72) Inventor: MILOW, Barbara, 51147 Köln (DE); COSTA, Diogo Manuel Amaral Santos, 51147 Köln (DE); SCHICK, Simon, 73441 Bopfingen (DE); SEIDE, Gunnar, 52074 Aachen (DE)
(74) Representative: dompatent

(56) References cited:
- CN-A- 105 970 325
- CN-A- 114 438 614

## Description

The present invention relates to a continuous cellulose wet-spinning process by dissolving same (cellulose) and spraying the dope obtained thereby through a nozzle into a regeneration bath in order to create a wet-gel fiber, stretching the regenerated fiber followed by passing it through multiple baths of different compositions for neutralisation and solvent-exchange.

Cellulose is the most abundant polysaccharide on earth, and is known for its renewability, low environmental and economic cost, and chemical and thermal stability (Wang, S., Lu, A., & Zhang, L., Recent advances in regenerated cellulose materials. Progress in Polymer Science, 2016. 53: p. 169- 206. Wong, L. C., Leh, C. P., & Goh, C. F., Designing cellulose hydrogels from non-woody biomass. Carbohydr Polym, 2021. 15;264: 118036). This polymer is an interesting choice for the production of aerogels. The term "aerogel" was first coined by Kistler in 1931 and describes a solid gel where the liquid media was replaced by air, with minor shrinkage of the solid porous network (Kistler, S.S., Coherent Expanded Aerogels and Jellies. Nature, 1931. 3211(127): p. 741). Cellulose aerogels are known for their low-density, high porosity, large specific surface area and low thermal conductivity (Budtova, T., Lokki, T., Malakooti, S., Rege, A., Lu, H., Milow, B., Vapaavuori, J., & Livod, S. L., Acoustic Properties of Aerogels: Current Status and Prospects. Advanced Engineering Materials, 2022. 25(6): 2201137; Nguyen, S.T., Feng, J., Ng, S. K., Wong, J. P. W., Tan, V. B. C & Duong, H. M., Advanced thermal insulation and absorption properties of recycled cellulose aerogels. Colloids and Surfaces A: Physicochemical and Engineering Aspects, 2014. 445: p. 128-134; Cai, J., Kimura, S., Wada, M., Kuga, S., & Zhang, L., Cellulose aerogels from aqueous alkali hydroxide-urea solution, ChemSusChem. 2008;1(1-2):149-54). Applications for these materials include catalysis, thermal insulation, adsorbentsand others (Han, Y., Zhang, X., Wu, X & Lu, C., Flame Retardant, Heat Insulating Cellulose Aerogels from Waste Cotton Fabrics by in Situ Formation of Magnesium Hydroxide Nanoparticles in Cellulose Gel Nanostructures. ACS Sustainable Chemistry & Engineering, 2015. 3(8): p. 1853-1859).

The development of a continuous system for the creation of ready-to-dry cellulose wet-gel fibers can increase the appeal of this material for different industry sectors, namely the textile and biomedical industries. According to Textile Exchange's "Preferred Fiber & Materials Market Report", by 2021 the global fiber production reached 113 million tonnes and is expected to grow to 149 million tonnes by 2030. This represents an increase in value for the same time period from EUR 193 billion to EUR 244 billion (Statista). Of this production, 64 % are synthetic fibers, 22 % cotton and only 6.4 % were manmade cellulosic fibers (MMCF). Viscose cellulose fibers comprise 80 % of MMCF production. In order to increase the use of renewable resources in this sector as well as to satisfy the growing fiber demand from developing countries, an increase in the share of bio-based fibers (virgin, recycled and from biowaste) in the global textile market is expected. According to the European Environment Agency's report "The role of bio-based textile fibres in a circular and sustainable textiles system that the production of man-made cellulosic fibers is forecast to reach a volume of 8.6 million tonnes by 2027 and a value of EUR 24 billion by 2025. As the viscose process is known for its toxicity and other variants such as lyocell (4 % of MMCFs in the market) can lead to cellulose degradation, there is further incentive to explore alternative dissolution methods such as the NaOH-based solvents used in this patent work. The valorisation of second-generation feedstocks and biomass wastes is compatible with this patent and further increases the sustainability of the production process. In this area, interested industrial partners would be multinational companies such as the Lenzig, Lioncel and Sappi which have extensive experience in pulping and cellulose fiber production. Academic partners potentially providing further expertise include the German Institute of Textile and Fiber Research (the largest textile research centre in Europe) or the ITA Group International Centre for Sustainable Textiles, from RWTH Aachen University. Currently, there is a partnership with the AMIBM - Polymer Processing Unit of the University as well as with the International Fibers Group - IFG Asota, which specialises in bio-based fibers.

Cellulose aerogel fibers are highly porous, have a high surface area and low density, making them interesting for biomedical textile applications. Their biocompatibility also favours their application as wound care products or as matrices with embedded sensors (smart biomedical textiles). This market valued EUR 14.5 billion in 2022 and it is expected to grow to EUR 19.7 billion by 2027 (Market and Markets). This growth is further supported by an aging global population and consequent increase in medical expenses. Biodegradable textiles are expected to account for the largest share of the market by 2033 due to their environmental and efficiency benefits (Spherical Insights). Relevant market players are companies such as Johnson & Johnson, DSM, Cardinal Health, and other multinational health companies. Contacts already exist with small MedTech companies such as Fibrothelium. Academic stakeholders that would be interested in this technology would be institutions such as the BioTex Institute of the Universitätsklinik Aachen (UKA) or the Fraunhofer Institute for Microstructure of Materials and Systems IMWS.

The aerogel market alone is valued at around EUR 1.2 billion in 2022 and is expected to grow to EUR 7.2 billion in 2032, with the main focus on silica aerogels (over 66 % market share in 2022) (Emergen Research). Silica aerogels, alongside organic and carbon aerogels, will be increasingly used in construction, battery development for electric cars, oil & gas, and other areas. The share of bio-based aerogels is expected to increase due to their valorisation in the biomedical field. In this area, expertise in CO₂ supercritical drying is an advantage and industrial players such as Aspen Aerogels, Cabot Corporation and Armacell would be interested in this work. Small industry players such as Aerogel-it or KEEY Aerogel (our current partner) would provide further support. Excellent research institutions such as the University of Hamburg, MINES Paris Tech or the Swiss Federal Laboratories for Materials Science and Technology (EMPA) have extensive experience in bio-based aerogels and would be interested in the patent described. All of the industrial and academic players mentioned for these markets are examples only and do not preclude the identification of other interested players around the world.

If previous techniques could produce fibers with similar properties to those produced here, this invention significantly reduces the costs associated with the neutralisation and solvent exchange steps. This eases industrial application and upscaling of this technology. As the aerogel industry struggles to develop technologies to scale up the production of bio-based aerogels, this invention creates the perfect conditions to do so by adapting existing industrial equipment at minimal cost For the production of cellulose aerogel fibers, the following four factors have to be controlled: Dissolution, regeneration, solvent exchange and drying (Trygg, J., Fardim, P., Gericke, M., Makila, E., & Salonen, J., Physicochemical design of the morphology and ultrastructure of cellulose beads. Carbohydr Polym, 2013. 93: p- 291-299; Gericke, M., Trygg, J., & Fardim, P., Functional cellulose beads: preparation, characterization, and applications. Chem Rev 113, 2013. p. 4812-4836; Gurikov, P., S. P, R., Griffin, J. S., Steiner, S. A., & Smirnova, I., 110th Anniversary: Solvent Exchange in the Processing of Biopolymer Aerogels: Current Status and Open Questions. Industrial & Engineering Chemistry Research, 2019. 58: p. 18590-18600). Common dissolution systems include the use of 1-Allyl-3-methylimidazolium chloride, metallic salts such as ZnCl₂, Ca(SCN)₂, NMMO, aqueous NaOH systems and others (Cai et al. loc cit.; Pircher, N., Carbajal, L., Schimper, C., Bacher, M., Rennhofer, H., Nedelec, J-M., Lichtenegger, H, C., Rosenau, T., & Liebner, F., Impact of selected solvent systems on the pore and solid structure of cellulose aerogels. Cellulose (Lond), 2016. 23: p. 1949-1966; Schestakow, M., Karadagli, I., & Ratke, L., Cellulose aerogels prepared from an aqueous zinc chloride salt hydrate melt. Carbohydr Polym, 2016. 136: p. 642-649; Lin, W.-H., & Jana, S. C., Analysis of porous structures of cellulose aerogel monoliths and microparticles; Microporous and Mesoporous Materials, 2021. 310; Saalwächter, K., Cellulose Solutions in Water Containing Metal Complexes. Macromolecules, 2000. p. 4094-4107). Amphiphilic additives such as urea, thiourea and PEG can be added to aqueous systems to improve their dissolution properties (Cai, L., Liu, Y., & Liang, H., Impact of hydrogen bonding on inclusion layer of urea to cellulose: Study of molecular dynamics simulation. Polymer, 2012. 53(5): p. 1124-1130; Wan, C., & Li, J., Cellulose aerogels based on a green NaOH/PEG solution: Preparation, characterization and influence of molecular weight of PEG. Fibers and Polymers, 2015. 16(6): p. 1230-1236; Xiong, B., Zhao, P., Hu, K., Zhang, L. & Cheng, G., Dissolution of cellulose in aqueous NaOH/urea solution: role of urea. Cellulose 21, 2014. p. 1183-1192). Pircher et al studied the effect of three different solvents on the internal properties of cellulose aerogels (NMMO, Ca(SCN)₂ and TBAF/DMSO) and found that the specific surface area varied from 190 m²/g to 328 m²/g, with effects on the pore size distribution and crystallinity of the aerogels (Subrahmanyam, R., Gurikov, P., Dieringer, P., Sun, M. & Smirnova, I., On the Road to Biopolymer Aerogels-Dealing with the Solvent. Gels, 2015. 1: p. 291-313). The concentration gradient in solvent exchange and the solvents used are important to maximize the interactions between the solvent and the cellulose gel while minimizing shrinkage (Gurikov et al. loc cit.; Subrahmanyam et al. loc cit.). In the case of drying, while the use of supercritical CO₂ allow the porous structure of the gel to be preserved, freeze drying orientates and enlarges the pores, significantly increasing the porosity and pore size of the final material (cryo-gel) (Xiong et al. loc cit.; Subrahmanyam et al. loc cit.).

Cellulose aerogels can be created in many different forms, such as beads, sheets, monoliths, and fibers. Some authors focused on developing cellulose aerogel fibers using salt-based dissolution methods (Ca(SCN)₂·4H2O and ZnCl₂), a lab-scale wet-spinning apparatus and organic solvents as regeneration baths. The materials obtained were mesoporous, presented high specific surface areas (100-250 m²/g) and low density (below 0.13 g/cm³). These are particularly interesting for biomedical and adsorption applications (Karadagli, I., Schulz, B., Schestakow, M., Milow, B., Gries, T & Ratke, L., Production of porous cellulose aerogel fibers by an extrusion process. The Journal of Supercritical Fluids, 2015. 106: p. 105-114; Rostamitabar, M., Seide, G., Jockenhoevel, S., & Ghazanfari, S., Effect of Cellulose Characteristics on the Properties of the Wet-Spun Aerogel Fibers. Applied Sciences, 2021. 11(4): 1525; Rostamitabar, M., Subrahmanyam, R., Gurikov, P., Seide, G., Jockenhoevel, S., & Ghazanfari, S., Cellulose aerogel micro-fibers for drug delivery applications. Materials Science & Engineering C, 2021. C 127: 112196; Schulz, B., Cellulose-Aerogelfasern [Doctoral Dissertation, RTWH Aachen University], 2016; Mroszczok, J., Schulz, B., Wilsch, K., Frenzer, G., Kasper, S., & Seide, G., Cellulose Aerogel Fibers for Thermal Encapsulation of Diesel Hybrid Engines for Fuel Savings in Cars. Materials Today: Proceedings, 2017. 4: p. S244-S248; Hoepfner, S., & Ratke, L., Open porous cellulose aerogel fibers. Technical Report. 2008; Ratke, L & Hoepfner, Sandra., Aerogel Fibers (German patent N° 10 2006 049 179 A1). 2008). Karadagli et al. obtained strong fibers (up to 6.4 MPa) for over 90% porosity. All these synthetic routes, however, required high temperatures for coagulation (95 °C-115 °C for calcium thiocyanate and 50°-70° for zinc chloride).

In the wet-spinning method, cellulose is dissolved, and the dope is sprayed through a nozzle into a regeneration bath (directly or on air) in order to create a fiber. The regenerated cellulose wet-gel fiber is stretched and passed through multiple baths with coagulating agents or water to neutralize and remove any salts or residues. The fiber is then collected and dried (Schulz, B., loc. cit.; Sheng, Z., Liu, Z., Hou, Y., Jiang, H., Li, Y., Li, G & Zhang, X., The Rising Aerogel Fibers: Status, Challenges, and Opportunities. Adv. Sci, 2023. 10: 205762). The molecular weight of cellulose, the viscosity of its solution and the draw rate of the spinning are essential parameters in this process. If the viscosity is too high, the nozzle may clog, and extrusion will only be possible at high shear rates. If the solution is too thin, the cellulose molecules don't have enough cohesive strength to form a fiber strong enough to be stretched. The same occurs if the molecular weight of the cellulose is too low, even if the dissolution is improved. At high molecular weights, the entanglement can be so intense that it prevents the regenerated cellulose fibers from stretching, negatively impacting its mechanical properties (Sheng, Z. loc. cit.; Asaadi, S., Hummel, M., Hellsten, S., Härkäsalmi, T., Ma, Y., Michud, A., & Sixta, H., Renewable High- Performance Fibers from the Chemical Recycling of Cotton Waste Utilizing an Ionic Liquid. Chem Sus Chem, 2016. 23;9(22): p. 3250-3258; Shen, H., Sun, T., & Zhou, J., Recent Progress in Regenerated Cellulose Fibers by Wet Spinning. Macromol. Mater. Eng. 2023. 2300089).

Cellulose fibers have already been created by dissolving cellulose in Water:NaOH solutions in the presence of additives (urea, thiourea) by regeneration in strong acidic media. Those fibers were found to have a homogeneous structure with a slight fibrillary orientation (Hoepfner, S. et al loc. cit.). Most of these studies focused on the mechanical properties of the fibers and indicated that low jet drawing ratios and higher post-drawing ratios resulted in improved tensile properties. These studies also used water baths at different temperatures for washing, but further batch-wise washing was performed after the fibers were collected (Cai, J., Zhang, L., Jinping, Z., Hao, L., Chen, H., & Jin,

H., Novel Fibers Prepared from Cellulose in NaOH/Urea Aqueous Solution. Macromolecular Rapid Communications, 2004. 25: p. 1558-1562; Wang, W., Li, F., Yu, J., Navard, P., & Budtova, T., Structure and properties of novel cellulose-based fibers spun from aqueous NaOH solvent under various drawing conditions. Cellulose, 2015. 22(2): p. 1333-1345; Yang, Y., Zhang, Y., Dawel-beit, A., Deng, Y., Lang, Y., & Yu, M., Structure and properties of regenerated cellulose fibers from aqueous NaOH/thiourea/urea solution. Cellulose, 2017. 24(10): p. 4123-4137). Meifang et al developed methods for the production of cellulose aerogel fibers using Water: NaOH dissolution system but, while the fiber production was continuous, an aging bath was required and further neutralization and washing steps were manually performed. This consumes further time and resources. The fibers produced were highly porous (> 85%) and presented high specific surface areas (100-400 m²/g). Higher specific surface areas were obtained when thiourea was added, when coagulation was smoother and when CO₂ drying was applied (Meifang, Z., Junyan, Z., Wenping, C., Si, M., Xiaoze, J., & Hao, W., Continuous cellulose aerogel fiber and preparation method thereof, Chinese Patent Application N° CN105970325A, 2016). Similar trends were observed in other patented works where cellulose fibers, pure or in composite form, were produced (Meifang, Z., Junyan, Z., Wenping, C., & Yanhua, C., Preparation method of continuous cellulose/TiO2 aerogel fiber with photocatalytic performance, Chinese Patent Application N° CN106012071A; Junhui, X., & Zhou, X., Polyimide aerogel fiber and preparation method thereof, Chinese Patent Application N° CN113403707A; Sixta, H., My, Y., & Hummel, M., A Method to Convert Mechanical Pulp Derived Waste Material into Value Added Cellulose Products, International Patent Application N° WO2018/142025 A1, Preparation method and product of warm-keeping regenerated cellulose fiber, Chinese Patent Application N° CN11443614A).

Previous research into the production of cellulose aerogel fibers has only been able to continuously extrude cellulose dope into a coagulation bath to form regenerated wet-gel fibers. These wet-gel fibers had to be collected and then manually placed in various aging, neutralization, and solvent exchange baths for long periods of time (fifteen minutes to one hour for each step, at best). This method increases the time and resources (raw-materials and man labour) required to produce ready-to-dry cellulose wet-gel fibers, thereby hindering its economic feasibility and industrial applicability.

The state of the art on the neutralization and solvent-exchange of cellulose wet-gel fibers for the production of aerogels only recognizes batch-wise, manual procedures. Therefore, there is a need for an improved process that can continuously produce wet-gel fibers without loss of quality. Surprisingly it was found that neutralization and solvent exchange steps could be optimized to allow a continuous process.

The present invention therefore relates to a Cellulose wet-spinning process that is generally characterized by
(1) dissolving same (Cellulose) and spraying the dope through a nozzle into a regeneration bath in order to create a (Cellulose)-wet-gel fiber,
(2) stretching the regenerated fiber by conventional means followed by passing it through multiple baths of different compositions for neutralisation and solvent-exchange,
where the baths are of the following compositions:
(a) the first bath containing distilled water,
(b) the second and following baths containing increased amounts of organic solvents, and
(c) the last bath is containing essentially pure organic solvents.

The numbering of the steps above refers only to the numbering of the neutralization and solvent-exchange baths, the first of which is preferably a water bath and ignores the regeneration bath where the fiber is formed and stretched.

In the present invention, after the formation of a cellulose wet-gel in the regeneration bath, the fiber preferably passes continuously through one distilled water bath and multiple baths with different water:organic solvent compositions (2:1, 1:2 and a final pure organic solvent bath, vol.%). Due to the high bath:fiber volume ratio and the selected solvent-exchange gradient, the collected fibers have a water content of less than 5 % and an electrical conductivity of less than 50 µS/cm. Under these conditions, the ion and water content are low enough for freezing or supercritical drying depending on the final bath selected and the morphology required for the application.

In the field of textiles and cellulose fibers, neutralization baths have already been used. However, the adaptation of the same equipment to create solvent exchange baths, with specific compositions that minimize the osmotic pressure in the fibers and preserve their porous structure, for the continuous and rapid processing of cellulose wet-gel fibers is a key feature of this invention.

In order to automate the neutralization and solvent exchange steps in the production of cellulose aerogel fibers, a series of water and water:organic solvent baths of different compositions were added to the wet-spinning apparatus. This was done to maintain a simple, environmentally friendly and inexpensive method to prepare cellulose solutions with viscoelastic properties capable of producing a wet-gel fiber by the wet-spinning method.

In a first embodiment the wet-spinning process comprises the following steps:
Step.1: A cellulose solution is prepared by dissolving cellulose into a water:NaOH:urea mixture (81:7:12 wt.%). The solution can be stored for long periods of time, at temperatures below -12 °C. Cellulose mass fraction is ideally 6-7 wt.% for improved process stability.
Step.2: The solution is thawed and stirred before being extruded through wet-spinning into a regeneration bath. In this phase, the dope will regenerate and create a cellulose wet-gel fiber. The regeneration bath is an aqueous acid solution or water:organic solvent solution. The steps 1 and 2 here describe the dissolution and regeneration of the fibers, which, in the claim 1, is put together as spinning.
Step.3: The fiber is stretched in the regeneration bath and passes through multiple 5 L baths in order to continuously neutralize it, remove all the salts and perform the required solvent exchanges. One bath of distilled water was applied as well as two baths of water:organic solvent mixtures (2:1 and 1:2 (v/v)). The fibers were collected in a pure organic solvent bath. Since stretching occurs as the fiber is drawn and removed from the regeneration bath into the first neutralization bath, the steps are not interchangeable.

Stretching the generated fiber by conventional means is to be understood for example by controlling the take-up speed (3 to 6 m/s), the pump revolutions (0.45 to 1.1/min) and lifting it to the neutralization and solvent-exchange baths. In the drawing of the fiber in the regeneration bath and when the fiber is introduced in the first neutralization bath. Gravity plays only a minor role in stretching when the fibers pass between baths. Stretching is only significant when the fiber is drawn in the coagulation bath and advances to neutralization.

In a more preferred embodiment, cellulose dissolution should occur in a water:NaOH system. Other additives such as thiourea or urea can be added.

In another preferred embodiment, the regeneration bath comprises an aqueous solution of an inorganic (sulfuric) or organic (acetic, lactic, and others) acid up to 2M concentration. Other options include aqueous solutions of ethanol, acetone, iso-propanol or other organic solvents. Concentration shall be adapted to assure the production of a stable wet-gel fiber.

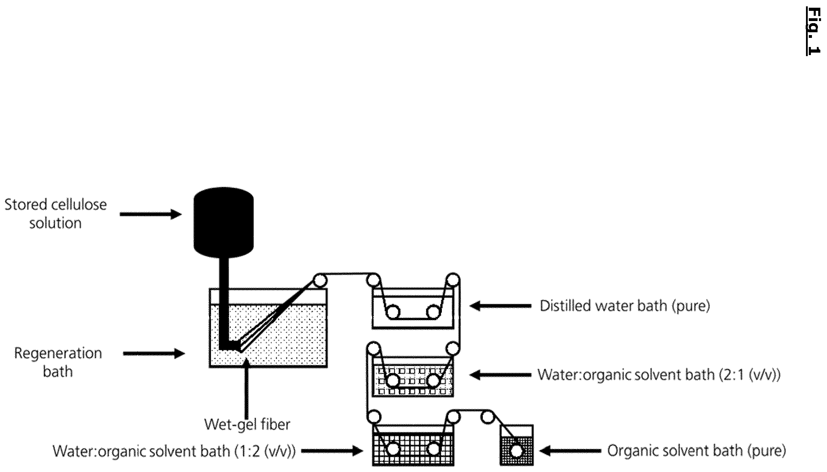

As described in Fig. 1, there are 4 baths:
1 - regeneration bath where the fiber is formed and stretched. Its composition is described in the paragraph mentioned here.
2 - pure water bath (neutralization).
3 - third and following baths containing increasing amounts of organic solvents, while
the last bath contains essentially pure organic solvents.

In a more preferred embodiment, the wet-gel fibers obtained are freeze dried or supercritically dried as a final step. For this the solvent of the solvent-exchange baths is replaced by ethanol, acetone, or iso-propanol for CO₂ supercritical drying or iso-butanol or any organic solvent that solidifies in an amorphous state to preserve the porous structure of the gel for freeze-drying.

In another embodiment , the diameter of the nozzle is preferably between 0.33 to 0.5 mm, a take-up speed between 3 to 6 m/min and a pump revolution between 0.45 to 1.1/min.

In a more preferred embodiment, regeneration, neutralization and solvent exchange occur at room temperature (i.e., 20 °C to 25 °C) and atmospheric pressure (about 1 bar).

In another preferred embodiment, the bath:fiber volume ratio should be over 5:1 to efficiently remove any salts and promote the solvent exchange without the need to constantly replace the baths.

In another embodiment, at least a three step wise solvent exchange shall be performed to effectively remove salts and water. More preferably a five or more step wise solvent exchange can be performed by adding appropriate baths to achieve a higher sample purity.

Fig 1. shows a scheme of the synthesis, neutralization and solvent exchange apparatus of gel cellulose fibers (lab-scale). A three step wise process was chosen for this scheme.

This process is based on the dissolution of cellulose into a spinning dope, on the formation of a wet-gel fiber when it encounters a regeneration bath and on passing that fiber through multiple baths of different composition. The crystallinity of cellulose and the strong hydrogen bond network between the fibers hinders its dissolution. The use of a water: NaOH mixture, with or without additives, can disrupt that hydrogen bond network and effectively dissolve cellulose at low temperatures. When in contact with a non-solvent such as ethanol, acetone or an acidic solution, the interaction between cellulose and its solvent will be destroyed. The rapid diffusion of non-solvent molecules to the interior of the extruded cellulose filament and of solvent molecules to the regeneration bath will lead to the reorganization of the cellulose fibers through hydrogen bonding into a 3D porous network. This constitutes a wet-gel cellulose fiber. The fiber is strong enough to be stretched and is continuously spun through a pure water bath. Through diffusion, any ions remaining in the wet gel from the dissolution media or molecules attached during the regeneration will leave the cellulose body into the bath. Due to the small diameter of the fiber, the process is fast enough to be done in a few minutes and in a continuous way. In order to exchange the solvent for further drying, the neutralized fiber passes through multiple baths with increasing concentration of the desired final solvent. The fast dissolution mechanism between the different solvents will enable their gradual replacement without increasing the osmotic pressure too much. When a sharper transition was tested, the porous structure could not be preserved. Due to the large bath:fiber volume ratio, the fibers collected in the final bath would have a water content lower than 5 % and electric conductivity below 50 µS/cm, which indicates that any salt that was added to the solution was removed and that the fibers can be freezed or supercritically dried depending on the final bath that was chosen.

Compared to the previous art, the beneficial effects of the present invention are:
- This invention combines the expertise in cellulose wet-spinning technology and the classical methods used for the dissolution, regeneration and conversion of cellulose into aerogels by re-purposing the classically used washing baths. Following this adaptation of the wet-spinning apparatus, the collected fibers are ready to be dried and other steps regarding neutralization and solvent exchange, previously manually done, are eliminated. This invention can produce ready-to-dry cellulose wet-gel fibers in a fraction of the time using less resources compared to what has been practiced in literature. The gap between the formation of cellulose wet-gel fibers and their drying is closed by this invention, where the cellulose wet-gel is formed and processed all at once, in a continuous, integral, and up scalable process.
- The wet-gel fibers produced, after drying, originated aerogels with high specific surface areas (> 100 m²/g), porous structures and with low shrinkage (< 35 %). Due to these properties and to the high area/volume ratio of these fibers, they are particularly interesting for biomedical, textile and adsorption applications.
- The raw materials used for the dissolution and regeneration of cellulose, alongside its neutralization and solvent exchange are accessible, cheap and easy to be applied. The apparatus developed can be adopted from current commercial alternatives and all the residues produced in this process can be recycled. The cellulose used in this process is a renewable material that can be obtained from bio-based wastes in the spirit of a biobased circular economy. The same can be applied to ethanol. The valorization of these residues increases the economic, environmental, and social benefits of this invention.

Further data can be observed below. In table 1, the range of electric conductivity and water content of the collected fibers in different solvents and experimental conditions are shown. For all following examples, regeneration occurred in a 2M acetic acid in water, with a three step wise solvent exchange process.

**Table 1. Electric conductivity and solvent purity range for fibers collected in different solvents**

| Solvent | Electrical Conductivity Range (µS/m), | Solvent Purity (Vol. %) |
|---|---|---|
| Ethanol | 13-250 | 91-95 |
| Acetone | 4-20 | 90-96 |
| Iso-propanol | 3-20 | 91-97 |

As shown above, low values of electric conductivity and high values of purity were obtained for all samples, especially for acetone and iso-propanol. For ethanol, a wider variability in the salt content was observed depending on the pumping speed and diameter of the fiber. For a three step wise solvent exchange apparatus, an optimal diameter of 0.33 mm and pumping speed of 0.5 ml/min was found, while the cellulose concentration and the spinning speed were not relevant. In a five step wise apparatus, consistent electrical conductivity below 50 µS/m and solvent purity above 95 % was obtained for all conditions.

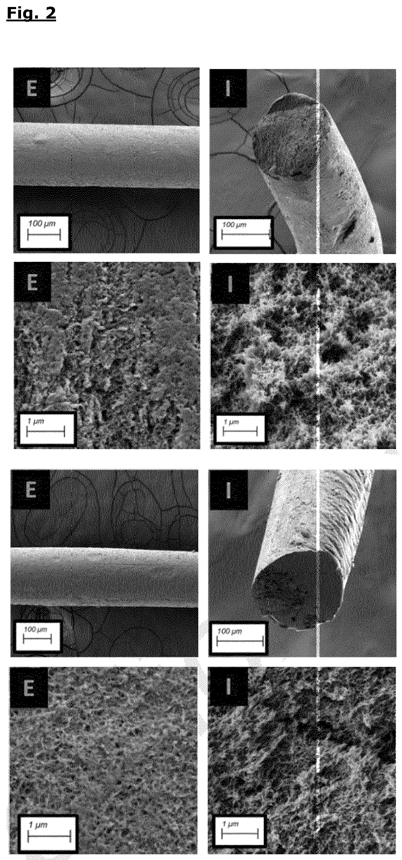

The fibers collected were successfully dried and were highly porous, especially at their core. Representative SEM pictures of fibers dried in supercritical CO₂ are shown in Fig. 2. Fig 2. depicts SEM pictures of the exterior (E) and interior (I) of a 7 wt.% cellulose aerogel fiber dried in ethanol. On the left, a nozzle diameter of 0.5 mm was used while, on the right, the diameter was 0.33 mm. Pumping speed was constant at 0.5 ml/min. No residues of salts were found, and the water content was low enough to enable a successful drying, as seen in the preservation of the porous structure.

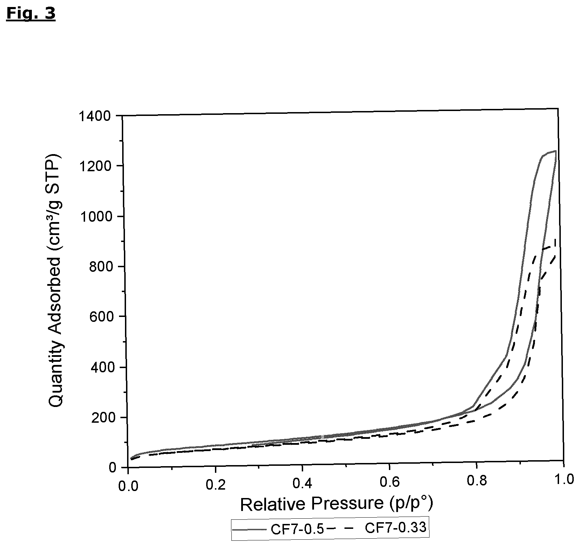

For both diameters shown, it was visible that the surface presented a porous structure more compact than the one in the interior. This was due to the regeneration mechanism of the cellulose dope when in contact with the regeneration bath. A fast coagulation of the surface of the filament created a compact cellulose network with no time for a careful reorganization of the cellulose fibers. The diffusion of the coagulant from the surface to the core of the cellulose filament took more time and enabled the reorganization of the cellulose fibers into a highly porous 3D network, with smaller and more numerous pores with thinner pore walls. This was observed on both samples with no major differences between their structures. The cavities observed may be resultant from bubbles formed during the pumping process, due to inhomogeneities in the cellulose dissolution or be artifacts from the sample preparation. Regarding their internal structure, these samples had a high adsorption capacity as observed in their N₂ adsorption curve, in Fig. 3. Fig 3. depicts N₂ adsorption-desorption isotherms of 7 wt.% cellulose aerogel fibers (CF7) dried in ethanol, with diameters of 0.5 and 0.33 mm (CF7-0.5 and CF7-0.33, respectively).

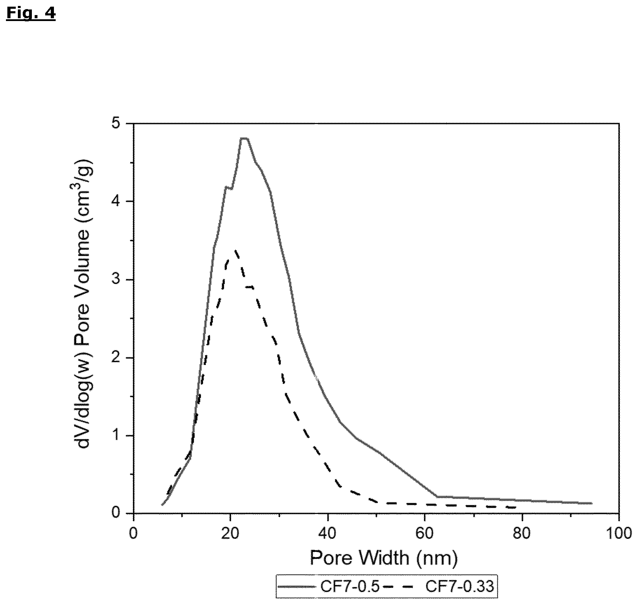

Each sample had different adsorption capacities, but they were classified as type IV isotherms, as described by IUPAC. These curves were characterized by having a saturation plateau at 0.7-1 (*P*/*P⁰*), which was formed due to pore condensation, and by hysteresis. This behaviour indicated a mesoporous nature for these aerogels. Differences in the porous structure of the samples and in the pore size distribution influenced the available surface area and, as a consequence, the adsorption capacity of the aerogels. In figure 4, the pore size distribution of 7 wt.% cellulose aerogel fibers (CF7) dried in ethanol, with diameters of 0.5 and 0.33 mm (CF7-0.5 and CF7-0.33, respectively), is shown.

In support of the isotherm graphs, both samples presented most of their pores in the mesoporous region (5-50 nm), with the presence of smaller macropores. These samples had optimal characteristics such as high surface areas and porous structures to be applied in adsorption, filtration, biomedical applications, and others. Depending on the final application, the synthetic parameters can be modified in order to impart the desired properties on the cellulose aerogel fibers.

## Claims

1. A continuous Cellulose wet-spinning process comprising the steps:
(1) dissolving cellulose and spraying the dope through a nozzle into a regeneration bath in order to create a wet-gel fiber,
(2) stretching the regenerated fiber followed by passing it through multiple baths of different compositions for neutralization and solvent exchange
which is **characterized by** that
(a) the first bath containing distilled water,
(b) the second and following baths containing increasing amounts of organic solvent, and
(c) the last bath containing essentially pure organic solvent.

2. Process according to Claim 1 **characterized by** using a cellulose dissolving bath containing a mixture of water and sodium hydroxide.

3. Process according to Claim 1 or 2 **characterized by** the addition of additives to the first bath, such as urea and/or thiourea in the dissolving step.

4. Process according to anyone of Claims 1 to 3 **characterized by** using a regeneration bath containing an aqueous acid solution or water:organic solvent solution.

5. Process according to Claim 4 **characterized by** using an inorganic, preferably sulfuric or organic, preferably acetic and/or lactic acid or an aqueous solution of ethanol, acetone and/or iso-propanol as solvent.

6. Process according to anyone of Claims 1 to 5 **characterized in that** the solvent is replaced by ethanol, acetone and/or iso-propanol for CO₂ supercritical drying or by any organic solvent, preferably iso-butanol for freeze drying.

7. Process according to Claim 6, **characterized by** that the solvent used for drying being the same as for the solvent-exchange baths.

8. Process according to anyone of Claims 1 to 7, **characterized by** a bath:fiber volume ratio of at least 5:1 in the regeneration, neutralization and solvent-exchange baths.

9. Process according to anyone of Claims 1 to 8, **characterized in that** preferably a three-step, more preferably a five- or more step wise solvent exchange is performed within the solvent-exchange baths.

10. Process according to anyone of Claims 1 to 9 **characterized in that** regeneration, neutralization and solvent exchange occur at room temperature and atmospheric pressure.

11. Process according to anyone of claims 1 to 10 performed in a continuous way.

## Patentansprüche

1. Kontinuierliches Cellulose-Nassspinnverfahren, umfassend die Schritte:
(1) Auflösen von Cellulose und Spritzen der Spinnlösung durch eine Düse in ein Regenerationsbad, um eine Nassgelfaser zu erzeugen,
(2) Strecken der regenerierten Faser und anschließendes Durchleiten durch mehrere Bäder unterschiedlicher Zusammensetzung zur Neutralisierung und zum Lösungsmittelaustausch,
**dadurch gekennzeichnet, dass**
(a) das erste Bad destilliertes Wasser enthält,
(b) das zweite und die folgenden Bäder zunehmende Mengen an organischem Lösungsmittel enthalten und
(c) das letzte Bad im Wesentlichen reines organisches Lösungsmittel enthält.

2. Verfahren gemäß Anspruch 1, **gekennzeichnet durch** die Verwendung eines Celluloseauflösungsbads, das ein Gemisch aus Wasser und Natriumhydroxid enthält.

3. Verfahren gemäß Anspruch 1 oder 2, **gekennzeichnet durch** die Zugabe von Additiven, wie Harnstoff und/oder Thioharnstoff, zu dem ersten Bad in dem Auflösungsschritt.

4. Verfahren gemäß einem der Ansprüche 1 bis 3, **gekennzeichnet durch** die Verwendung eines Regenerationsbads, das eine wässrige Säurelösung oder eine Lösung aus Wasser und organischem Lösungsmittel enthält.

5. Verfahren gemäß Anspruch 4, **gekennzeichnet durch** die Verwendung einer anorganischen Säure, vorzugsweise Schwefelsäure, oder einer organischen Säure, vorzugsweise Essig- und/oder Milchsäure, oder einer wässrigen Lösung von Ethanol, Aceton und/oder Isopropanol als Lösungsmittel.

6. Verfahren gemäß einem der Ansprüche 1 bis 5, **dadurch gekennzeichnet, dass** das Lösungsmittel durch Ethanol, Aceton und/oder Isopropanol für die überkritische CO₂-Trocknung oder durch ein beliebiges organisches Lösungsmittel für die Gefriertrocknung, vorzugsweise Isobutanol, ersetzt wird.

7. Verfahren gemäß Anspruch 6, **dadurch gekennzeichnet, dass** das zum Trocknen verwendete Lösungsmittel dasselbe ist wie für die Lösungsmittelaustauschbäder.

8. Verfahren gemäß einem der Ansprüche 1 bis 7, **gekennzeichnet durch** ein Bad:Faser-Volumenverhältnis von wenigstens 5:1 im Regenerations-, Neutralisations- und Lösungsmittelaustauschbad.

9. Verfahren gemäß einem der Ansprüche 1 bis 8, **dadurch gekennzeichnet, dass** vorzugsweise in den Lösungsmittelaustauschbädern ein dreischrittiger, besonders bevorzugt ein fünf- oder mehrschrittiger, Lösungsmittelaustausch durchgeführt wird.

10. Verfahren gemäß einem der Ansprüche 1 bis 9, **dadurch gekennzeichnet, dass** Regeneration, Neutralisation und Lösungsmittelaustausch bei Raumtemperatur und Atmosphärendruck erfolgen.

11. Verfahren gemäß einem der Ansprüche 1 bis 10, das kontinuierlich durchgeführt wird.

## Revendications

1. Procédé de filage humide continu de la cellulose, comprenant les étapes consistant à :
(1) dissoudre la cellulose et pulvériser la solution à travers une buse dans un bain de régénération afin de créer une fibre de gel humide,
(2) étirer la fibre régénérée, suivi de son passage dans plusieurs bains de compositions différentes pour la neutralisation et l'échange de solvant,
**caractérisé en ce que**
(a) le premier bain contient de l'eau distillée,
(b) le deuxième bain et les bains suivants contiennent des quantités croissantes de solvant organique, et
(c) le dernier bain contient un solvant organique sensiblement pur.

2. Procédé selon la revendication 1, **caractérisé par** l'usage d'un bain de dissolution de la cellulose qui contient un mélange d'eau et d'hydroxyde de sodium.

3. Procédé selon la revendication 1 ou 2, **caractérisé par** l'ajout d'additifs, tels que l'urée et/ou la thiourée, au premier bain dans l'étape de dissolution.

4. Procédé selon l'une quelconque des revendications 1 à 3, **caractérisé par** l'usage d'un bain de régénération contenant une solution d'acide aqueuse ou une solution d'eau et de solvant organique.

5. Procédé selon la revendication 4, **caractérisé par** l'usage d'un acide inorganique, de préférence sulfurique, ou organique, de préférence acétique et/ou lactique, ou d'une solution aqueuse d'éthanol, d'acétone et/ou d'isopropanol comme solvant.

6. Procédé selon l'une quelconque des revendications 1 à 5, **caractérisé en ce que** le solvant est remplacé par de l'éthanol, de l'acétone et/ou de l'isopropanol pour le séchage au CO₂ supercritique, ou par tout solvant organique pour la lyophilisation, de préférence de l'isobutanol.

7. Procédé selon la revendication 6, **caractérisé en ce que** le solvant utilisé pour le séchage est le même que celui des bains d'échange de solvant.

8. Procédé selon l'une quelconque des revendications 1 à 7, **caractérisé par** un rapport bain/fibre d'au moins 5 : 1 dans les bains de régénération, de neutralisation et d'échange de solvant.

9. Procédé selon l'une quelconque des revendications 1 à 8, **caractérisé en ce que** de préférence, un échange de solvant en trois étapes, et de préférence encore en cinq étapes ou plus, est effectué dans les bains d'échange de solvant.

10. Procédé selon l'une quelconque des revendications 1 à 9, **caractérisé en ce que** la régénération, la neutralisation et l'échange de solvant sont effectuées à température ambiante et à pression atmosphérique.

11. Procédé selon l'une quelconque des revendications 1 à 10, effectué dans une manière continue.
